# EUROPEAN PATENT APPLICATION

(11) **EP 0 657 104 A1**
(43) Date of publication of application: **14.06.1995**
(21) Application number: 93203463.0
(22) Date of filing: 09.12.1993
(51) Int. Cl.: A23D 7/00

(54) **Edible Water-in-Oil Microemulsions**

(71) Applicant: UNILEVER N.V., NL-3000 DK Rotterdam (NL)
(72) Inventor: Leser, Martin E. Unilever Res. Vlaardiningen Lab., NL-3133 AT Vlaardingen (NL)
(74) Representative: Keppels, Willem Richard Engelbertus Gerardus, Drs.

(57) **Abstract**

Thermodynamically stable transparent edible water-in-oil microemulsion comprising up to 33% of water, 0.1-30% of a diacylglyceride having one strong polar hydrophillic group, 0.1-30% of a mono-acylglyceride and oil.

## Description

This invention relates to an edible water-in-oil microemulsion.

For incorporating water and polar ingredients into edible oils emulsions can be used, usually resulting in cloudy or opaque products, although stable, clear liquids can be obtained by making microemulsions using a well selected combination of oils, polar liquids and surfactants. US-A-5,045,337 describes edible W/O microemulsions using polyglycerolesters as surfactants, whereby up to 5% water can be incorporated into the microemulsion, although in the examples only 1% water is used. Attempts to incorporate more water resulted in not completely stable microemulsions.
It would be desirable to make more stable microemulsions, having the possibility of incorporating more water and/or other polar ingredients and to use other surfactants being generally acceptable in the food industry.
The invention provides thereto a thermodynamically stable transparent edible water-in-oil microemulsion comprising one or more oils, oil-soluble surfactants and polar ingredients characterized by up to 33% water and a surfactant comprising 0.1-30% of a diacylglyceride selected from the group of phospholipids and diacylglycerideesters selected from the group of citrates, tartrates and lactilates and 0.1-30% of a monoacylglyceride. In general these diacylglycerides have a strong polar hydrophillic group.

Preferably the acylgroups in the surfactants are roughly of the same character as the bulk of the acyl groups present in the triacylglycerides forming the oil of the microemulsion.

Particularly preferred diacylglyceride surfactants being phoopholipids and preferred monoacylglycerides being those having acylgroups with 8-18 carbon atoms. Monoacylglycerides having unsaturated acylchains are in particular preferred.

It does not need explanation that all ingredients of the emulsions should be edible. Similarly the oil or oil mixture should preferably be refined

As stated before the microemulsions can in practice contain up to about 33% of water. When trying to increase this amount the emulsion turns turbid. The lower level of water cannot practically be defined: any amount of water over the amount which is soluble in the oil-surfactant mixture will result in a microemulsion on mixing.

Dependent on the amount of aqueous phase the amount of oil phase can vary from 20 to 99.8%.

In this specification and claims all percentages refer to weights unless otherwise indicated.

Both pure and naturally occurring mixtures of lecithins and modified lecithins can be used as phospholipids in the microemulsions of this invention.

The term "oil" in this specification and claims includes triacylglycerides (predominantly) and diacylglycerides of application. Consequently some solid fats may be dissolved therein. The origin may be both natural and synthetic. Natural oils and fats may be vegetable, animal or marine origin, although the first source is preferred.

Microemulsions can be favourably used for incorporating oil-insoluble but water soluble ingredients into oils without changing the optical character of said oils. Examples of such ingredients being salts, sugar, aminoacids, vitamin B, C and K, flavours, flavour precursors, proteins, flavour boosters (eg. 5'-nucleotides) trace minerals, organic acids, peptides, and water soluble anti-oxidants and usually water contents up to 5% of the emulsion will be sufficient for this purpose.

The following examples are merely illustrative of the present invention.

The general procedure was as follows:
the water soluble ingredients were dissolved in the water for the microemulsion and the surfactants in the oil. Any undissolved material was separated by centrifuging or filtration. Thereafter the clear liquids are combined and thoroughly mixed using a mixer.

### Example 1.

Refined sunflower oil (88,49) was mixed with 10 g of a surfactant consisting of 1 g glycerophosphatidylcholine (PC) and 9 g glyceromono-oleate (GMO). After obtaining a clear liquid 1.6 g water is added and mixing was continued until again a clear liquid was obtained. Instead of water an 1:1 aqueous solution of 1 M glycine and fructose could be used.

### Example 2.

88 g refined corn oil was mixed with 1 g glycerol phosphatidylethanolamine and 9 g GMO. 2 g water could be incorporated in this mixture. The water could contain about 30 % NaCl.

### Example 3.

The process of example 1 was repeated using 32,5 g medium chain triglyceride oil (chain lengths 8-10 carbon atoms), 15 g PC, 20 g glyceromonocaprylate and 32,5 g water.

### Example 4.

The process of example 1 was repeated using 20 g groundnut oil, 20 g PC, 40 g GMO and 20 g water.

## Claims

1. Thermodynamically stable transparent edible water-in-oil microemulsion comprising one or more oils, oil-soluble surfactants and polar ingredients characterized by up to 33% water and a surfactant comprising 0.1-30% of a diacylglyceride selected from the group of phospholipids and diacylglycerideesters selected from the group of citrates, tartrates, lactilates and 0.1-30% of a monoacylglyceride.

2. Microemulsion according to claim 1 wherein the acylgroups in the surfactants are roughly of the same character as the bulk of the acyl groups present in the triacylglycerides forming the oil of the microemulsion.

3. Microemulsion according to claim 1 or 2 wherein the diacylglyceride surfactants are phospholipids.

4. Microemulsion according to claim 1, 2 or 3, wherein the monoacylglycerides have acylgroups with 8-18 carton atoms.

5. Microemulsion In accordance with any of of claims 1-4, wherein the monoacylglycerides have unsaturated acylchains.

6. Microemulsion In accordance with any of claims 1-5, wherein the oil or oils are refined.
